# EUROPÄISCHE PATENTANMELDUNG

(11) **EP 1 152 043 A2**
(43) Veröffentlichungstag der Anmeldung: **07.11.2001**
(21) Anmeldenummer: 01110621.8
(22) Anmeldetag: 30.04.2001
(51) Int. Cl.: C09D 161/32, C08L 61/30, C08L 61/06

(54) **Aminoharzgemisch zur Herstellung von Folien und Kanten mit reduzierter Formaldehydabspaltung**

(30) Priorität: 05.05.2000 DE 10021849
(71) Anmelder: Solutia Germany GmbH & Co. KG, 55252 Mainz-Kastel (DE)
(72) Erfinder: Scholl, Frank, 62352 Bad Homburg (DE); Wonner, Johann, Dr., 63110 Rodgau (DE); Hobisch, Gerald, Dr. Prof., Graz 8042 (AT)

(57) **Zusammenfassung**

Wäßrige Aminoharzzusammensetzungen enthaltend Aminoharze A, Formaldehyd-bindende Zusätze (Hilfsmittel) **B**, die gegebenenfalls Hydroxylgruppen-haltige Polyurethane **B13** enthalten, gegebenenfalls Acrylatharze C in Form von wäßrigen Dispersionen, und Wasser, und deren Verwendung als Imprägniermittel für Papier zur Herstellung von Finishfolien und Kanten

## Beschreibung

Die vorliegende Erfindung betrifft wäßrige, hitzehärtbare Aminoharzmischungen auf Basis von verätherten Aminoharzen und formaldehydbindenden Hilfsmitteln sowie deren Verwendung zur Imprägnierung von Papieren und Karton.

Zur Beschichtung von Flächen bzw. Schmalflächen von Holzwerkstoffen werden lackierte Folien (Finish-Folien) bzw. Kartonimprägnate eingesetzt (Kunststoff-Handbuch Bd. 10 *Duroplaste*, Hanser-Verlag, 2. Aufl. 1988, S. 462 f., S. 477 bis 479). Zur Herstellung von Finish-Folien (zur Beschichtung von Flächen) und -Kanten (zur Beschichtung von Schmalflächen insbesondere von Platten) werden saugfähige Papiere mit Lösungen oder Dispersionen von (duroplastischen) Aminoharzen wie z.B. Harnstoff-Formaldehyd- und/oder Melamin-Formaldehyd-Harzen, gegebenenfalls in Kombination mit Dispersionen von Thermoplasten wie Acrylatdispersionen oder Acrylatstyroldispersionen imprägniert, im Heißluftstrom getrocknet und gleichzeitig ausgehärtet und anschließend lackiert.

Um ein ausreichend gutes Penetrationsverhalten der Tränkflotten in das Papier bzw. den Karton zu gewährleisten, müssen die Harzlösungen aus wäßriger oder alkoholischer Verdünnung verarbeitet werden. Aufgrund der hohen Zellstoffquellung in wäßrigen Systemen sind die aus hoher wäßriger Verdünnung hergestellten Folien und Kanten spröde, weisen eine hohe Wasseraufnahme auf und zeigen auch im lackierten Zustand eine optisch nur wenig ansprechende Oberfläche. Die in der DE-A 23 09 334 beschriebene Arbeitsweise aus mit C₁-bis C₄-Alkoholen verdünnten Tränkflotten ergibt zwar Folien und Kanten mit guten anwendungstechnischen Eigenschaften, erfordert aber aufwendige Maßnahmen zur Abgasaufbereitung. Der in DE-A 44 39 156 beschriebene Lösungsweg durch Modifizierung von Melaminharzen mit Guanaminen ermöglicht das Imprägnieren aus rein wäßrigen Tränkflotten. Nachteilig sind allerdings die durch den Einsatz der Guanamine bedingten deutlich höheren Kosten für das Aminoharz.

Die Formaldehydemissionen fertiger Finish-Folien und Kanten werden nach Lagerung im Normklima (23 °C, 50 % rel. Luftfeuchtigkeit) in Anlehnung an die Norm EN 717-2 (FESYP-Methode, Gasanalyse) ermittelt. Folien und Kanten mit Werten von kleiner als 3,6 mg/(h·m²) nach der FESYP-Methode erfüllen den Grenzwert der Norm ("E 1"). Die ermittelten Emissionsraten bleiben auch nach mehrwöchiger Lagerung im Normklima mehr oder weniger konstant. Die an den Folien und Kanten beobachteten Formaldehydemissionen treten beim Einsatz von Harnstoff- und/oder Melamin-Formaldehydharzen in den Tränkflotten zur Imprägnierung der Papier- bzw. Kartonbahnen bzw. in den Lackrezepturen zur Lackierung der Folien und Kanten auf. Durch Einsatz besonders formaldehydarmer Harnstoff- und/oder Melamin-Formaldehyd-Harze (mit niedriger Formaldehydabspaltung) lassen sich die Formaldehydemissionen, gemessen nach der FESYP-Methode (Normklima), auf Werte um 2 mg/(h·m²) reduzieren.

Überraschenderweise wurde nun festgestellt, daß bei Lagerung von nach dem Stand der Technik hergestellten Kanten, die ursprünglich (vor Beginn der Lagerung) der Einstufung E1 genügen ("E1-Kanten"), mit Anfangswerten für die Formaldehydemission von 1,0 bis 3,5 mg/(h·m²), unter nicht standardisierten Klimabedingungen bei im Sommer üblichen Temperaturen und Luftfeuchtigkeiten die Formaldehydemissionen im Verlauf von wenigen Wochen auf Werte von z. T. deutlich größer als 3,5 mg/(h·m²) ansteigen und somit die Kanten nicht mehr dem E1-Kriterium genügen. Dieser unerwartet hohe Anstieg in den Formaldehydemissionen ließ sich durch Lagerung unter definierten Bedingungen im Tropenklima (35 °C, 90% rel. Luftfeuchtigkeit) bestätigen, wobei vor jeder Messung eine dreitägige Rekonditionierung im Normklima an die Lagerung im Tropenklima angeschlossen wurde.

Aus dem Stand der Technik ist bekannt, daß sich der Gehalt an freiem Formaldehyd sowie die Emissionen von Formaldehyd durch Zusätze von Formaldehydfängern wie z.B. Harnstoff und Harnstoffderivaten reduzieren lassen. So lassen sich nach der DE-A 38 37 965 Finish-Folien und Kanten mit nach DIN 52368 bestimmter vernachlässigbarer Formaldehydabgabe durch Zusatz von Harnstoff zum Melamin-Formaldehyd-Kondensationsprodukt herstellen. Zum Verhalten bei bzw. nach Lagerung im Tropenklima werden allerdings keine Angaben gemacht. Nach der DE-A 34 03 136 eignen sich Mischungen aus organischen Hydroxyverbindungen und einem Amid als formaldehydbindende Mittel in Platten aus Holzcellulosematerialien. Der Einsatz dieser Mischungen als Formaldehydfänger in Finish-Folien und Kanten wird nicht beschrieben. Ein Zusatz der in DE-A 34 03 136 beschriebenen Mischungen zu Aminoharzen, die zur Herstellung von Finish-Folien und Kanten eingesetzt werden, führt zu einer deutlichen Verschlechterung der Flexibilität der damit hergestellten Finish-Folien und Kanten. Der Einsatz literaturbekannter Formaldehydfänger wie Harnstoff, Äthylenharnstoff bzw. Propylenharnstoff ergab Finish-Folien und Kanten, die im Normalklima das E1-Kriterium erfüllten, im Tropenklima jedoch den E1-Grenzwert von 3,5 mg/(h·m²) deutlich überschritten.

Aufgabe der vorliegenden Erfindung ist es daher, Aminoharzmischungen zur Herstellung von Folien und Kanten zu entwickeln, mit denen gegenüber dem Stand der Technik Finishfolien bzw. Möbelkanten mit deutlich reduzierter Formaldehydemission bei Lagerung im Tropenklima unter Erhalt der geforderten anwendungstechnischen Eigenschaften hergestellt werden können.

Gegenstand der Erfindung sind wäßrige Aminoharzzusammensetzungen enthaltend Aminoharze **A**, Formaldehyd-bindende Zusätze (Hilfsmittel) **B**, die gegebenenfalls Hydroxylgruppen-haltige Polyurethane **B13** enthalten, gegebenenfalls Acrylatharze **C** in Form von wäßrigen Dispersionen, und Wasser.

Falls die Komponente **B** lediglich aus mindestens einer organischen Hydroxylverbindung, die in Wasser oder einem einwertigen Alkohol mit 1 bis 4 Kohlenstoffatomen löslich ist und ausgewählt ist aus bis zu 6 Kohlenstoffatomen enthaltenden zwei-, drei- und fünfwertigen Alkoholen, Pentaerythrit, Sorbit, bis zu 6 Kohlenstoffatomen enthaltenden Monosacchariden, bis zu 12 Kohlenstoffatomen enthaltenden Disacchariden, Polysacchariden mit einer Ostwald-Viskosität von bis zu 200 mPa·s bei 25 °C und einer Konzentration, die 37 % Refraktion entspricht, nur einen Benzolring enthaltenden ein- und mehrwertigen aromatischen Alkoholen sowie ein- und mehrwertigen Phenolen, und aus mindestens einem Amid, das in Wasser oder einem einwertigen Alkohol mit 1 bis 4 Kohlenstoffatomen löslich ist und aus bis zu 6 Kohlenstoffatomen enthaltenden aliphatischen Amiden und nur einen Benzolring enthaltenden aromatischen Amiden ausgewählt ist, besteht, so ist die Gegenwart mindestens einer der Komponenten **B13** und **C** in der Zusammensetzung zwingend.

Die Aminoharze **A** sind mit C₁- bis C₄-Alkoholen verätherte, in Wasser lösliche Melaminharze, Harnstoffharze oder Melamin-Harnstoff-Mischkondensate. In den erfindungsgemäßen Zusammensetzungen lassen sich auch solche Melaminharze einsetzen, bei denen ein Teil (bis zu 20 % ihrer Masse) des Melamins durch andere Triazine wie Acetoguanamin, Caprinoguanamin oder Benzoguanamin ersetzt ist. Bevorzugt werden jedoch Harze mit Gehalten an anderen Triazinen von weniger als 10, insbesondere von weniger als 5 %, gemessen in derselben Skala. Besonders bevorzugt werden reine Melaminharze bzw. deren Mischkondensate mit Harnstoff. Die Harze werden mindestens teilweise mit den genannten Alkoholen, insbesondere Methanol, n-Butanol und Isobutanol, veräthert. Besonders bevorzugt sind mit Methanol verätherte Aminoharze.

Besonders bevorzugt werden vor allem Melaminharze mit einem Stoffmengenverhältnis (Molverhältnis) von Melamin: Harnstoff: Formaldehyd: Methanol von 1mol: (0 bis 2 mol) : (1,8 bis 5,8 mol) : (0,8 bis 5,5 mol).

Die Herstellung der Aminoharze **A** ist allgemein bekannt. Zunächst wird durch Zusatz von Formaldehyd zu den Aminoplastbildnern bei pH-Werten von 7 bis 10 und Temperaturen von 40 bis 110 °C methyloliert und kondensiert, anschließend wird der Verätherungsalkohol zugegeben und bei pH-Werten von 1 bis 7 bei Temperaturen von 30 bis 80 °C weiterreagiert. Die Kondensations- und Verätherungsbedingungen richten sich nach der für das Harz gewünschten Wasserverdünnbarkeit, die mindestens 1 Gew.Teil Harz zu 5 Gew.Teilen entsalztes Wasser beträgt, sowie nach den geforderten Penetrationseigenschaften.

Als Komponente **B** werden formaldehydbindende Hilfsmittel zugesetzt. Diese Hilfsmittel sind ausgewählt aus Mischungen **B1** von organischen Amiden **B11** mit bis zu 10 C-Atomen und einem bis vier amid- oder imidartig gebundenen Stickstoffatomen, wie Harnstoff bzw. Harnstoffderivaten wie Thioharnstoff, Äthylenharnstoff (2-Imidazolidinon), Propylenharnstoff, Acetylenharnstoff (Glykoluril), sowie Formamid, Acetamid, Benzamid, Oxalamid, Succinimid, Malonamid und Dicyandiamid, und Polyhydroxylverbindungen B12 ausgewählt aus aliphatischen linearen und verzweigten Verbindungen **B121** mit 2 bis 6 Hydroxylgruppen und 1 bis 10 C-Atomen wie Glykol, 1,2- und 1,3-Propylenglykol, Neopentylglykol, Glycerin, Trimethylolpropan, Ditrimethylolpropan, Erythrit, Pentaerythrit, Dipentaerythrit, Sorbit und Mannit, Monosacchariden **B122** mit bis zu 6 C-Atomen, und Disacchariden **B123** mit bis zu 12 C-Atomen und gegebenenfalls wasserlöslichen bzw. in Wasser dispergierbaren, Hydroxylgruppen enthaltenden Urethanverbindungen **B13.** Diese Urethanverbindungen sind niedermolekular ( zahlenmittlere molare Masse Mₙ von 150 bis 5000 g/mol, bevorzugt 300 bis 4000 g/mol) und enthalten hydrophile Gruppen, die bevorzugt nichtionisch sind, insbesondere solche Bausteine, die von Glykol oder von Oligo-oder Polyäthylenglykol abgeleitet sind. Beispiele für geeignete Verbindungen sind Addukte aus aliphatischen linearen oder cyclischen Diisocyanaten, beispielsweise 1,2-Diisocyanatoäthan und 1,6-Diisocyanatohexan, mit Äthylenglykol, Diäthylenglykol oder deren Mischungen mit 1,2- oder 1,3-Propylenglykol, wobei diese letzteren hydrophoben Diole nur in solchen Anteilen (z. B. unter 25 % der Masse an Diolen insgesamt) eingesetzt werden, daß das Addukt wasserlöslich bzw. wasserdispergierbar bleibt.

Ebenfalls geeignet als formaldehydbindende Komponente **B2** sind durch Umsetzung von Polyhydroxylverbindungen **B21**, umfassend die unter **B12** genannten sowie aliphatische Polyhydroxyamine **B211** mit 2 bis 6 Hydroxylgruppen und 1 bis 4 aminisch gebundenen Stickstoffatomen pro Molekül, die keine freien aminischen Wasserstoffatome enthalten, wie N-Methyldiäthanolamin, N,N,N',N'-Tetrakis-(2-hydroxyäthyl)äthylendiamin und Triäthanolamin mit mono- oder auch mehrfunktionellen aliphatischen, cycloaliphatischen oder aromatischen Isocyanaten **B22** wie z.B. Hexamethylendiisocyanat erhaltenen, Urethangruppen enthaltenden Reaktionsprodukte.

Der Zusatz an formaldehydbindendem Hilfsmittel **B** (berechnet als Masse ohne Lösungs- oder Verdünnungsmittel, also 100 %ig) beträgt 2 bis 50 Gewichtsteile auf 100 Gewichtsteile Aminoharz (ebenfalls 100 %ig). Zusätzlich zur Formaldehydreduktion wird beim Einsatz eines Umsetzungsproduktes aus Hydroxyaminen und Diisocyanat, wie des Umsetzungsproduktes von Triäthanolamin mit Hexamethylendiisocyanat im Beispiel 11 eine deutliche Verlängerung der Topfzeit festgestellt.

Die Acrylatharzdispersion C ist eine, beispielsweise durch Emulsions-Copolymerisation von olefinisch ungesättigtenMonomeren herstellbare, Dispersion eines Acrylat-Copolymerisats in Wasser, wobei die zu ihrer Herstellung verwendete Monomerenmischung einen überwiegenden Anteil (mehr als 50 % ihrer Masse) an sog. Acrylmonomeren enthält, also Acryl- oder Methacrylsäure und deren Derivaten, insbesondere Estern mit aliphatischen Alkoholen mit 1 bis 10 Kohlenstoffatomen, Estern mit aliphatischen Polyhydroxyverbindungen mit 2 bis 10 Kohlenstoffatomen und mindestens zwei Hydroxylgruppen pro Molekül, und den Nitrilen der genannten Säuren. Bevorzugt werden als Acrylmonomere unter den Estern Methyl-, Äthyl-, n-Butyl-, t-Butyl-, Hexyl- und 2-Äthylhexyl-(meth)acrylat, Hydroxyäthyl- und Hydroxypropyl-(meth)acrylat. Weiter können copolymerisierbare Monomere wie Styrol und andere aromatische Vinylverbindungen, Ester oder Halbester von olefinisch ungesättigten Dicarbonsäure wie insbesondere Maleinsäure, Vinylester wie Vinylacetat oder Vinylversatat, Vinylhalogenide oder Vinyläther copolymerisiert werden. Die Kunstharzdispersionen haben üblicherweise Feststoff-Massenanteile von 25 bis 85 %; sie werden dem Aminoharz oder aber erst der Tränkflotte zugesetzt. Das Verhältnis der Masse des Acrylatcopolymerisats in der Acrylatdispersion zur Masse des Aminoharzes in dessen wäßriger Lösung oder Dispersion kann in der Zusammensetzung 0 bis150 : 100 betragen, vorzugsweise 20 bis 140 : 100.

Mit den Aminoharzzusammensetzungen werden saugfähige Papiere oder Kartone imprägniert. Üblicherweise wird dabei soviel der Aminoharzzusammensetzung eingebracht, daß die flächenbezogene Masse ("Flächengewicht") des Papiers bzw. Kartons nach der Imprägnierung und anschließender Trocknung um einen Faktor von 1,3 bis 2,5, bevorzugt 1,4 bis 1,8, ansteigt.

Die Verwendung der erfindungsgemäßen Mischungen führt zu einer deutlichen Reduktion der Formaldehydemissionen aus den im Tropenklima gelagerten Folien und Kanten.

### Beispiele:

### Herstellung eines teilverätherten Melamin-Formaldehyd-Harzes ("MF-Harz")

In einem 30 1 Laborkessel mit Rührer, Rückflußkühler und Thermometer wurden 6717 g (87,2 mol) 39 %iger wäßriger Formaldehyd vorgelegt und auf 68 °C angeheizt. Dann wurden 31,5 ml 2 N Natronlauge zugesetzt und sofort danach 3450 g (27,4 mol) Melamin dazugegeben. Der Ansatz erwärmte sich durch die exotherme Reaktion von Melamin und Formaldehyd auf ca. 83 °C und wurde solange bei dieser Temperatur gehalten, bis das Melamin vollständig in Lösung gegangen war. Dann wurde auf 55 °C abgekühlt, 16560 g (517 mol) Methanol und 30 ml 53 %ige Salpetersäure zugesetzt. Das Reaktionsgemisch wurde auf 59 °C angeheizt und solange bei dieser Temperatur gerührt, bis der Ansatz klar in Lösung gegangen war. Nach weiteren 30 min wurde die Reaktion durch Zugabe von ca. 140 ml 2 N NaOH abgebrochen. Der pH-Wert wurde auf 10 eingestellt. Überschüssiges Methanol wurde unter vermindertem Druck (erzeugt durch eine Wasserstrahlpumpe) abdestilliert und der Festkörper-Massenanteil des Harzes auf 75 % (gemessen an einer Probe von 2 g, Trocknung während 1 h bei 120 °C in einer Glasschale) eingestellt. Das Harz hatte folgende Kennzahlen: Gehalt (Festkörper-Massenanteil): 75 %; Viskosität bei 23°C: 480 mPa·s, Massenanteil an freiem Formaldehyd: 0,17%; Wasserverdünnbarkeit : unbegrenzt.

### Hilfsmittel BA: Mischung aus Glycerin und Harnstoff

Zu 100 g Glycerin wurden unter Rühren 100 g Harnstoff eingetragen und auf 90 °C erwärmt. Nach dem Lösen des Harnstoffes wurde auf 20 °C abgekühlt. Es wurde eine Mischung von kleisterähnlicher Konsistenz erhalten.

### Hilfsmittel BB : Mischung aus Glycerin, Harnstoff und Polyurethandiol

Zu 100 g Glycerin wurden unter Rühren 100 g Harnstoff und 67 g einer 88 %igen Lösung eines Urethandiols (zahlenmittlere molare Masse Mₙ 320 g/mol, OH-Zahl 350 mg/g, Urethangruppengehalt 37 cg/g) eingetragen und auf 90 °C erwärmt. Nach dem Lösen wurde auf 20 °C abgekühlt. Es wurde eine Mischung von kleisterähnlicher Konsistenz erhalten.

### Hilfsmittel BC : Umsetzungsprodukt aus Trimethylolpropan (TMP) und Hexamethylendiisocyanat (HDI)

In einem geeigneten Reaktionsgefäß mit Wasserabscheider wurden 100 g TMP aufgeschmolzen, danach wurde 3 Stunden bei 140 °C unter Rühren Stickstoff über die Masse geleitet, um Wasserspuren zu beseitigen. Dann wurde auf 60 °C gekühlt und 8 g HDI unter starkem Rühren langsam zugetropft. Die Temperatur wurde solange beibehalten, bis der Massenanteil von Isocyanatgruppen im Reaktionsprodukt ("NCO-Wert") unter 0,1% gesunken war. Nun wurde mit Wasser ein Festkörper-Massenanteil von 85 % eingestellt. Das Reaktionsgemisch war eine farblose, niederviskose Lösung.

### Hilfsmittel BD : Umsetzungsprodukt aus Tripropylenglykol und Hexamthylendiisocyanat

In ein geeignetes Reaktionsgefäß mit Wasserabscheider wurden 100 g Tripropylenglykol gefüllt, danach wurde 3 Stunden bei 140 °C unter Rühren Stickstoff über die Masse geleitet, um Wasserspuren zu beseitigen. Dann wurde auf 40 °C gekühlt und 5 g HDI unter starkem Rühren langsam zugetropft. Die Temperatur wurde solange beibehalten, bis der NCO-Wert unter 0,1% gesunken war. Nun wurde mit Wasser ein Festkörper-Massenanteil von 85 % eingestellt. Das Reaktionsgemisch war eine schwach gelbe, niedrigviskose Lösung.

### Hilfsmittel BE : Umsetzungsprodukt aus Glycerin und Hexamethylendiisocyanat

In ein geeignetes Reaktionsgefäß mit Wasserabscheider wurden 100 g Glycerin gefüllt, anschließend wurde 5 Stunden lang bei 140 °C mit Spezialbenzin 80/120 als Kreislaufmittel azeotrop das Wasser entfernt. Nach dem Entfernen des Kreislaufmittels (Abdestillieren) wurde auf 60 °C gekühlt und 5 g HDI unter starkem Rühren langsam zugetropft. Die Temperatur wurde solange beibehalten, bis der NCO-Wert unter 0,1% gesunken war. Das Reaktionsgemisch war eine gelbe, mittelviskose Lösung.

### Hilfsmittel BF : Umsetzungsprodukt aus Triäthanolamin und Hexamethylendiisocyanat

In ein geeignetes Reaktionsgefäß mit Wasserabscheider wurden 100 g Triäthanolamin gefüllt, danach wurde während 5 Stunden bei 140 °C mit Spezialbenzin 80/120 als Kreislaufmittel azeotrop das Wasser entfernt. Nach dem Entfernen des Kreislaufmittels wurde auf 40 °C gekühlt und 15 g HDI unter starkem Rühren langsam zugetropft. Die Temperatur wurde solange beibehalten, bis der NCO-Wert unter 0,1% gesunken war. Das Reaktionsgemisch war eine gelbe, mittelviskose Lösung.

### Anwendungstechnische Prüfung:

In den Beispielen wurde stets das oben beschriebene MF-Harz eingesetzt. Als Acrylatdispersion wurde eine Dispersion auf Basis eines Mischpolymerisats aus Methylmethacrylat, Butylacrylat, Hydroxyäthylmethacrylat, Acrylsäure und Styrol mit einer Hydroxylzahl von ca. 120 mg/g und einem Festkörper-Massenanteil von ca. 50 % eingesetzt, die gegebenenfalls auf den niedrigeren angegebenen Wert (45 %) verdünnt wurde.

### Beispiel 1-4 und Vergleichsbeispiele 1-4:

Zu jeweils 100 g des oben beschriebenen "MF-Harzes" wurden 130 g 50 %ige Acrylatdispersion und 1,7 g p-Toluolsulfonsäure sowie für die einzelnen Anwendungsbeispiele die in der Tabelle 1 angegebenen Hilfsmittel zugesetzt. Nach Verdünnen auf eine Flottenkonzentration von 50 % wurden mit diesen Flotten jeweils Papiere mit einer flächenbezogenen Masse ("Flächengewicht") von 200 g/m² (typischer Kantenkarton) imprägniert und bei 160°C auf eine Restfeuchte von ca. 2 % getrocknet. Nach dem Imprägnieren betrug das Flächengewicht ca. 330 g/m². Die so erhaltenen Kantenimprägnate wurden mit einem wäßrigen Säure-härtenden Lack (plastifiziertes Harnstoff-Harz; Kombination eines Harnstoffharzes mit einem kurz- bis mittelöligen Alkydharz, mit p-Toluolsulfonsäure als Härtungsmittel) lackiert und bei einer Temperatur von 160 °C auf eine Restfeuchte von 1,5 % getrocknet. Der Lackauftrag betrug ca. 20 g/m². Die jeweils erhaltenen Kanten entsprachen anwendungstechnisch den Anforderungen.

Zur Bestimmung der Formaldehydemissionen wurden die Kantenproben vor jeder Messung 3 Tage im Normklima (23 °C, 50 % rel. Luftfeuchtigkeit) konditioniert. Zur Bestimmung der Formaldehydemissionen im Tropenklima wurden die Kanten 1 bis 4 Wochen bei 35 °C und 90 % relativer Luftfeuchtigkeit gelagert sowie anschließend vor der eigentlichen Messung jeweils 3 Tage im Normklima rekonditioniert. Die Messung der Formaldehydemissionen erfolgte nach EN 717-2. In der Tabelle 1 sind die erhaltenen Formaldehydemissionen in mg/(h·m²) als Mittelwerte der 1- bis 4- Stundenwerte aufgelistet:

**Tabelle 1:**

| | Hilfsmittel | direkt nach Herstellung | n. 1 Woche | n. 2 Wochen | n. 4 Wochen | n. 6 Wochen |
|---|---|---|---|---|---|---|
| Beispiel 1 | 4 g BA | 1,7 | 4,5 | 3,8 | 3,6 | 3,3 |
| Beispiel 2 | 12 g BA | 0,8 | 3,6 | 3,2 | 2,8 | 2,1 |
| Beispiel 3 | 4 g BB | 1,4 | 3,9 | 3,4 | 2,5 | 2,3 |
| Beispiel 4 | 12 g BB | 1,1 | 3,5 | 3,0 | 2,3 | 2,2 |
| Vergl.beisp. 1 | - | 2,0 | 5,2 | 4,4 | 3,7 | 4,2 |
| Vergl.beisp. 2 | 5 g Harnstoff | 1,9 | 5,1 | 4,2 | 4,1 | 4,0 |
| Vergl.beisp. 3 | 12 g Harnstoff | 1,4 | 5,4 | 3,8 | 3,2 | 2,6 |
| Vergl.beisp. 4 | 12 g Glycerin | 1,6 | 4,6 | 3,7 | 3,4 | 2,5 |

Die nach Beispiel 2 und 4 hergestellten Kanten erfüllen auch nach einer Woche Lagerung im Tropenklima das E1-Kriterium (= 3,6 mg/h/m²).

### Beispiel 5 und Vergleichsbeispiel 5:

Zu 100 g des oben beschriebenen MF-Harzes wurden 1,5 g p-Toluolsufonsäure sowie für die einzelnen Anwendungsbeispiele die in Tabelle 2 angegebenen Hilfsmittel zugesetzt. Mit diesen unverdünnten Flotten wurden Papiere (typischer Kantenkarton; 200 g/m²) mittels Rakelauftrag von der Dekorseite imprägniert und bei 160 °C auf eine Restfeuchte von ca. 1,5 % getrocknet. Danach betrug das Flächengewicht ca. 305 g/m². Die so erhaltenen Kantenimprägnate wurden mit einem wäßrigen säurehärtenden Lack (s.o.) lackiert und bei einer Temperatur von 160 °C auf eine Restfeuchte von 1,5% getrocknet. Der Lackauftrag betrug ca. 20 g/m². Die jeweils erhaltenen Kanten entsprachen anwendungstechnisch den Anforderungen.
Die Formaldehydemissionen (angegeben in mg/(h·m²)) wurden wie in Beispiel 1 bestimmt.

**Tabelle 2:**

| | Hilfsmittel | direkt n. Herst. | n. 1 Woche | n. 2 Wochen | n. 4 Wochen | n. 6 Wochen |
|---|---|---|---|---|---|---|
| Beispiel 5 | 12 g BB | 1,0 | 2,2 | 2,1 | 1,8 | 1,8 |
| Vergl.beisp. 5 | - | 1,0 | 3,3 | 2,4 | 2,9 | 2,9 |

### Beispiele 6 und 7 und Vergleichsbetspiele 6 und 7:

Zu 100 g des oben beschriebenen MF-Harzes wurden 200 g 50 %ige Acrylatdispersion und 1,7 g p-Toluolsufonsäure sowie für die einzelnen Anwendungsbeispiele die in Tabelle 3 angegebenen Mengen an Hilfsmittel und PEG 400 (Polyäthylenglykol mit einer zahlenmittleren molaren Masse Mₙ von ca. 400 g/mol) zugesetzt. Nach Verdünnen auf eine Flottenkonzentration von 47 %(Massenanteil der Harze in der wäßrigen Flotte) wurden mit diesen Flotten Papiere (typischer Kantenkarton; flächenbezogene Masse ca. 200 g/m²) imprägniert und bei 170 °C auf eine Restfeuchte von ca. 1,6 % getrocknet. Das Endgewicht betrug ca. 330 g/m². Die so erhaltenen Kantenimprägnate wurden mit einem wäßrigen säurehärtenden Lack (s.o.) lackiert und 60 s bei einer Temperatur von 160 °C getrocknet. Der Lackauftrag betrug ca. 16 g/m². Die jeweils erhaltenen Kanten entsprachen anwendungstechnisch den Anforderungen. Zur Bestimmung der Formaldehydemissionen wurden die Kantenproben vor jeder Messung 3 Tage im Normklima (23 °C, 50% rel. Luftfeuchtigkeit) konditioniert. Zur Bestimmung der Formaldehydemissionen im Tropenklima wurden die Kanten 1 Woche bei 35 °C und 90 % relativer Luftfeuchtigkeit gelagert sowie anschließend vor der eigentlichen Messung 3 Tage im Normklima rekonditioniert. Die Messung der Formaldehydemissionen erfolgte nach EN 717-2. In der Tabelle 3 sind die erhaltenen Formaldehydemissionen (angegeben in mg/(h·m²)) als Mittelwerte der 1- bis 4- Stundenwerte aufgelistet:

**Tabelle 3:**

| | Hilfsmittel als 100 %iger Stoff | PEG 400 | direkt n. Herst | n. 1 Woche |
|---|---|---|---|---|
| Beispiel 6 | 20 g BC | 20 g | 0,97 | 2,61 |
| Beispiel 7 | 20 g BD | 20 g | 1,28 | 2,63 |
| Vergl.beisp. 6 | - | 40g | 1,52 | 3,49 |
| Vergl.beisp. 7 | 20 g Polypropylen-glykol (Mₙ < 400 g/mol) | 20 g | 1,82 | 2,93 |

### Beispiele 8 und 9 und Vergleschsbeispiele 8 und 9:

Zu 100 g des oben beschriebenen MF-Harzes wurden 1,6 g 45%ige Acrylatdispersion und 1,0 g p-Toluolsufonsäure sowie für die einzelnen Anwendungsbeispiele die in Tabelle 4 angegebenen Hilfsmittel zugesetzt. Nach Verdünnen auf eine Flottenkonzentration von 75% wurden mit diesen Flotten Papiere (typischer Kantenkarton; 200 g/m²) imprägniert und 90 s bei 180 °C getrocknet. Das Endgewicht betrug ca. 335 g/m². Die erhaltenen unlackierten Kanten entsprachen anwendungstechnisch den Anforderungen.

Zur Bestimmung der Formaldehydemissionen wurden die Kantenproben vor jeder Messung 3 Tage im Normklima (23 °C, 50 % rel. Luftfeuchtigkeit) konditioniert. Zur Bestimmung der Formaldehydemissionen im Tropenklima wurden die Kanten 1 Woche bei 35 °C und 90% relativer Luftfeuchtigkeit gelagert sowie anschließend vor der eigentlichen Messung jeweils 3 Tage im Normklima rekonditioniert. Die Messung der Formaldehydemissionen erfolgte nach EN 717-2. In der Tabelle 4 sind die erhaltenen Formaldehydemissionen als Mittelwerte der 1-bis 4- Stundenwerte aufgelistet. Die Flexibilität der Kanten wurde mit Hilfe des Biegetestes bei Zimmertemperatur beurteilt. Angegeben wurde der Biegeradius, bei dem die Kante gerade noch nicht bricht. Wie aus Tabelle 4 hervorgeht, lassen sich die Formaldehydemissionen gegenüber dem Vergleichsbeispiel 8 deutlich reduzieren, unter Erhaltung eines möglichst geringen Biegeradius. Durch Zusatz von geringen Mengen an Harnstoff und Sorbit kann die gewünschte Formaldehydreduktion nicht erzielt wurden. Bei höherer Dosierung (Vergleichsbeispiel 9a) verschlechtert sich die Flexibilität der Kante (größerer Biegeradius). In der Tabelle ist die Formaldehydemission in mg/(h·m²) und der Biegeradius in mm angegeben.

**Tabelle 4:**

| | Hilfsmittel als 100%iger Stoff | PEG 400 | Sorbit | Harnstoff | direkt n. Herst. | n. 1 Woche | Biegeradius |
|---|---|---|---|---|---|---|---|
| Beispiel 8 | 9 g BC | 27 g | - | - | 0,64 | 1,57 | 5 |
| Beispiel 9 | 9 g BC | 27 g | 1,1 g | 1,1 g | 0,49 | 1,51 | 5 |
| Vergl.beisp. 8 | - | 36 g | - | - | 0,97 | 2,51 | 6 |
| Vergl.beisp. 9 | - | 36 g | 1,1 g | 1,1 g | 0,80 | 2,22 | 5 |
| Vergl.beisp. 9 a | - | 36 g | 3,8 g | 3,8 g | - | - | 8 |

### Beispiele 10 und 11 und Vergleichsbeispiel 10 und 11:

Zu 100 g des oben beschriebenen MF-Harzes wurden 1,7 g 45%ige Acrylatdispersion und 1,3 g p-Toluolsufonsäure sowie für die einzelnen Anwendungsbeispiele die in Tabelle 5 angegeben Hilfsmittel zugesetzt. Nach Verdünnen auf eine Flottenkonzentration von 75% wurden mit diesen Flotten Papiere (typischer Kantenkarton; 200 g/m²) imprägniert und 90 s bei 180 °C getrocknet. Das Endgewicht betrug ca. 335 g/m². Die erhaltenen unlackierten Kanten entsprachen anwendungstechnisch den Anforderungen.

Zur Bestimmung der Formaldehydemissionen wurden die Kantenproben vor jeder Messung 3 Tage im Normklima (23 °C, 50% rel. Luftfeuchtigkeit) konditioniert. Zur Bestimmung der Formaldehydemissionen im Tropenklima wurden die Kanten 1 Woche bei 35 °C und 90% relativer Luftfeuchtigkeit gelagert sowie anschließend vor der eigentlichen Messung jeweils 3 Tage im Normklima rekonditioniert. Die Messung der Formaldehydemissionen erfolgte nach EN 717-2. In der Tabelle 5 sind die erhaltenen Formaldehydemissionen als Mittelwerte der 1-bis 4- Stundenwerte (in mg/(h·m²) )angegeben. Die Flexibilität der Kanten wurde mit Hilfe des Biegetestes bei Zimmertemperatur beurteilt. Angegeben wird der Biegeradius, bei dem die Kante gerade noch nicht bricht. Wie aus Tabelle 5 hervorgeht, lassen sich die Formaldehydemissionen gegenüber dem Vergleichsbeispiel 10 deutlich reduzieren, unter Erhaltung eines möglichst geringen Biegeradius. Durch Zusatz von geringen Mengen an Harnstoff und Sorbit kann die gewünschte Formaldehydreduktion nicht erzielt werden (Vergl. Bsp. 11). Als Topfzeit wird die Zeit verstanden, bis die bei 30 °C gelagerte Tränkflotte auf eine Viskosität (gemessen als Auslaufzeit nach DIN 53211 bei 23 °C) von mehr als 60 s oder die Penetrationszeit mit einem definierten Testpapier auf über 70 s ansteigt. Das Hilfsmittel BF weist einen erheblichen Vorteil gegenüber dem Stand der Technik hinsichtlich Formaldehydemissionen und Topfzeit auf.

**Tabelle 5:**

| | Hilfsmittel 100%ig | PEG 400 | Sorbit | Hamstoff | direkt n. Herst | n. 1 Woche | Topfzeit bei 30°C in h | Biegeradius in mm |
|---|---|---|---|---|---|---|---|---|
| Beispiel 10 | 9g BE | 27g | 1,1g | 1,1g | 0,46 | 1,47 | 8 | 6 bis 8 |
| Beispiel 11 | 9g BF | 27g | 1,1g | 1,1g | 0,17 | 0,46 | >30 | 5 bis 6 |
| Vergl..Beisp. 10 | - | 36g | - | - | 0,75 | 1,98 | 6 | 5 bis 6 |
| Vergl..Beisp. 11 | - | 36g | 1,1g | 1,1g | 0,58 | 1,82 | 7 | 5 bis 6 |

## Patentansprüche

1. Wäßrige Aminoharzzusammensetzungen enthaltend Aminoharze A, Formaldehyd-bindende Zusätze (Hilfsmittel) B, die gegebenenfalls Hydroxylgruppen-haltige Polyurethane B13 enthalten, gegebenenfalls Acrylatharze **C** in Form von wäßrigen Dispersionen, und Wasser, mit der Maßgabe, daß die Gegenwart mindestens einer der Komponenten **B13** und **C** in der Zusammensetzung zwingend ist, falls die Komponente B lediglich aus mindestens einer organischen Hydroxylverbindung, die in Wasser oder einem einwertigen Alkohol mit 1 bis 4 Kohlenstoffatomen löslich ist und ausgewählt ist aus bis zu 6 Kohlenstoffatomen enthaltenden zwei-, drei- und fünfwertigen Alkoholen, Pentaerythrit, Sorbit, bis zu 6 Kohlenstoffatomen enthaltenden Monosacchariden, bis zu 12 Kohlenstoffatomen enthaltenden Disacchariden, Polysacchariden mit einer Ostwald-Viskosität von bis zu 200 mPa·s bei 25 °C und einer Konzentration, die 37 % Refraktion entspricht, nur einen Benzolring enthaltenden ein- und mehrwertigen aromatischen Alkoholen sowie ein- und mehrwertigen Phenolen, und aus mindestens einem Amid, das in Wasser oder einem einwertigen Alkohol mit 1 bis 4 Kohlenstoffatomen löslich ist und aus bis zu 6 Kohlenstoffatomen enthaltenden aliphatischen Amiden and nur einen Benzolring enthaltenden aromatischen Amiden ausgewählt ist, besteht.

2. Wäßrige Aminoharzzusammensetzungen nach Anspruch 1, **dadurch gekennzeichnet, daß** die Aminoharze**A** mit C₁- bis C₄-Alkoholen verätherte, in Wasser lösliche Melaminharze, Harnstoffharze oder Melamin-Harnstoff-Mischkondensate sind.

3. Wäßrige Aminoharzzusammensetzungen nach Anspruch 1, **dadurch gekennzeichnet, daß** die Aminoharze **A** mit Methanol verätherte Melaminharze bzw. Melamin/Harnstoffharze sind mit einem Stoffmengenverhältnis (Molverhältnis) von Melamin : Harnstoff Formaldehyd : Methanol von 1 mol: (0 bis 2 mol): (1,8 bis 5,8 mol): (0,8 bis 5,5 mol).

4. Wäßrige Aminoharzzusammensetzungen nach Anspruch 1, **dadurch gekennzeichnet, daß** das Verhältnis der Masse der Komponente **B** zur Masse des Aminoharzes **A** in der Mischung 1 bis 30 : 100 beträgt.

5. Wäßrige Aminoharzzusammensetzungen nach Anspruch 1, **dadurch gekennzeichnet, daß** die formaldehydbindenden Hilfsmittel **B** ausgewählt sind aus Mischungen **B1** von organischen Amiden **B11** mit bis zu 10 C-Atomen und einem bis vier amid- oder imidartig gebundenen Stickstoffatomen und Polyhydroxylverbindungen **B12** ausgewählt aus aliphatischen linearen und verzweigten Verbindungen **B121** mit 2 bis 6 Hydroxylgruppen und 1 bis 10 C-Atomen, Monosacchariden **B122** mit bis zu 6 C-Atomen, und Disacchariden **B123** mit bis zu 12 C-Atomen und gegebenenfalls wasserlöslichen bzw. in Wasser dispergierbaren, Hydroxylgruppen enthaltenden Urethanverbindungen **B13.**

6. Wäßrige Aminoharzzusammensetzungen nach Anspruch 1 oder 5, **dadurch gekennzeichnet, daß** Urethanverbindungen **B13** niedermolekular sind mit einer zahlenmittleren molaren Masse Mₙ von 150 bis 5000 g/mol und hydrophile Gruppen enthalten.

7. Wäßrige Aminoharzzusammensetzungen nach Anspruch 1, **dadurch gekennzeichnet, daß** als formaldehydbindende Hilfsmittel **B** die Komponenten **B2** eingesetzt werden, die erhältlich sind durch Umsetzung von Polyhydroxylverbindungen **B21**, ausgewählt aus aliphatischen linearen und verzweigten Verbindungen **B121** mit 2 bis 6 Hydroxylgruppen und 1 bis 10 C-Atomen, Monosacchariden **B122** mit bis zu 6 C-Atomen und Disacchariden **B123** mit bis zu 12 C-Atomen sowie aliphatischen Polyhydroxyaminen **B211** mit 2 bis 6 Hydroxylgruppen und 1 bis 4 aminisch gebundenen Stickstoffatomen pro Molekül, die keine freien aminischen Wasserstoffatome enthalten, mit mono- oder auch mehrfunktionellen aliphatischen, cycloaliphatischen oder aromatischen Isocyanaten **B2**2.

8. Wäßrige Aminoharzzusammensetzungen nach Anspruch 1, **dadurch gekennzeichnet, daß** die Acrylatharze **C** wäßrige Dispersionen eines Acrylat-Copolymerisats in Wasser sind, wobei die zugrundeliegende Monomerenmischung mehr als 50 % ihrer Masse an Acrylmonomeren enthält, ausgewählt aus Acryl- und Methacrylsäure, deren Estern mit aliphatischen Alkoholen mit 1 bis 10 Kohlenstoffatomen, deren Estern mit aliphatischen Polyhydroxyverbindungen mit 2 bis 10 Kohlenstoffatomen und mindestens zwei Hydroxylgruppen pro Molekül, und den Nitrilen der genannten Säuren.

9. Wäßrige Aminoharzzusammensetzungen nach Anspruch 8, **dadurch gekennzeichnet, daß** das Verhältnis der Masse des Acrylatcopolymerisats zur Masse des Aminoharzes in der Mischung 0 bis 150 : 100 beträgt.

10. Verwendung der wäßrigen Aminoharzzusammensetzungen nach Anspruch 1 zur Imprägnierung von Papier oder Karton zum Einsatz als Finishfolien oder Kanten.

11. Finishfolien oder Kanten, bestehend aus mit wäßrigen Aminoharzzusammensetzungen nach Anspruch 1 imprägniertem Papier oder Karton.

12. Finishfolien oder Kanten nach Anspruch 11, **dadurch gekennzeichnet, daß** die flächenbezogene Masse des Papiers bzw. Kartons nach der Imprägnierung und anschließender Trocknung um einen Faktor von 1,3 bis 2,5 größer ist als die des eingesetzten Substrats.
